# EUROPEAN PATENT APPLICATION

(11) **EP 1 447 534 A2**
(43) Date of publication of application: **18.08.2004**
(21) Application number: 04001083.7
(22) Date of filing: 20.01.2004
(51) Int. Cl.: F01N 1/08, F01N 3/00

(54) **Muffler**

(30) Priority: 22.01.2003 JP 2003013544
(71) Applicant: Calsonic Kansei Corporation, Tokyo 164-8602 (JP)
(72) Inventor: Toyoshima, Youhei c/o Calsonic Kansai Corporation, Tokyo 164-8602 (JP)
(74) Representative: Grünecker, Kinkeldey, Stockmair & Schwanhäusser Anwaltssozietät

(57) **Abstract**

The muffler includes a sound-absorbing structure (1A, 1B) having a gas introduced from a fuel cell (100). The muffler includes an outlet (13) defined by the sound-absorbing structure for discharging a drain separated from the gas.

## Description

### CROSS-REPERENCE TO RELATED APPLICATIONS

This application is based upon and claims the benefit of priority from Japanese Patent Application No. 2003-013544 filed on January 22, 2003; the entire contents of which are incorporated herein by reference.

### BACKGROUND OF THE INVENTION

The present invention is related to a muffler located at midpoint of a discharge pipe of a fuel cell vehicle in use of a fuel gas.

There is proposed an automotive using a fuel cell system. The automotive includes a discharge pipe for discharging of an exhaust gas from a fuel cell. The automotive includes a drain-pipe midstream of the discharge pipe. See Japanese Patent Application Publication Laid-Open No.2002-96648.

### SUMMARY OF THE INVENTION

In the automotive, however, the exhaust gas passes through the discharge pipe, with a lot of moisture mixed therein. Thus, the automotive discharges the exhaust gas with moisture from the outlet of the discharge pipe, and cannot prevent water-jump.

An object of the invention is to provide a muffler which removes moisture mixed in an exhaust gas to maintain sound-damping performance. Another object of the invention is to provide a muffler which prevents water- jump from a discharge pipe.

An aspect of the invention provides the following muffler. The muffler includes a sound-absorbing structure having a gas introduced from a fuel cell. The muffler includes an outlet defined by the sound-absorbing structure for discharging a drain separated from the gas.

The sound-absorbing structure has an action of expansion, Interference, sound-absorbing or resonance, with an expansion chamber, sound-absorbing material, a resonance chamber, a flow division arrangement, or a combination of the structures.

The sound-absorbing structure may have expansion chambers separated from each other. One of the expansion chambers has an inlet for introducing the gas. The outlet is located at said one of the expansion chambers.

The sound-absorbing structure may include a remover configured to remove moisture from the gas.

The sound-absorbing structure may have an inlet for introducing the gas from the fuel cell. The remover includes a tube enclosing the inlet and having a first hole through the tube in a radial direction. The remover includes a wall located opposing the inlet and closing off the tube in an axial direction.

The tube may be configured in a cylindrical shape.

The expansion chambers may include a partition between the expansion chambers. The partition defines a second hole for the expansion chambers to communicate with each other through the second hole.

The second hole may be located at a lower half portion of the partition in a vertical direction.

The outlet may connect with another tube.

### BRIEF DESCRIPTION OF THE ACCOMPANYING DRAWINGS

Fig. 1 is a schematic view of a discharge system adapted for a fuel cell according to a first embodiment of the invention;
Fig. 2 is a sectional view of a muffler in Fig. 1;
Fig. 3A is a perspective view of a moisture-remover in Fig. 2, as viewed from downstream;
Fig. 3B is a perspective view of a moisture-remover in Fig. 2, as viewed from upstream;
Fig. 4 is a sectional view of a muffler according to a second embodiment of the invention;
Fig. 5 is a sectional view of modified drainage structure of the muffler in Figs. 2 and 4;
Fig. 6 shows a characteristic diagram of sound-damping deterioration level relative to moisture content rate of sound-absorption material with a frequency band of 0.6 to 1.0 kHz in average;
Fig. 7 shows a characteristic diagram of sound-damping deterioration level relative to moisture content rate of sound-absorption material with a frequency band of 1.4 to 2.0 kHz In average; and

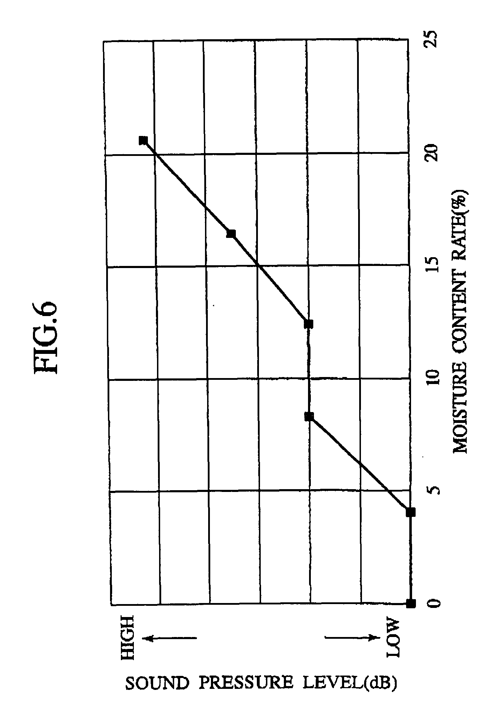

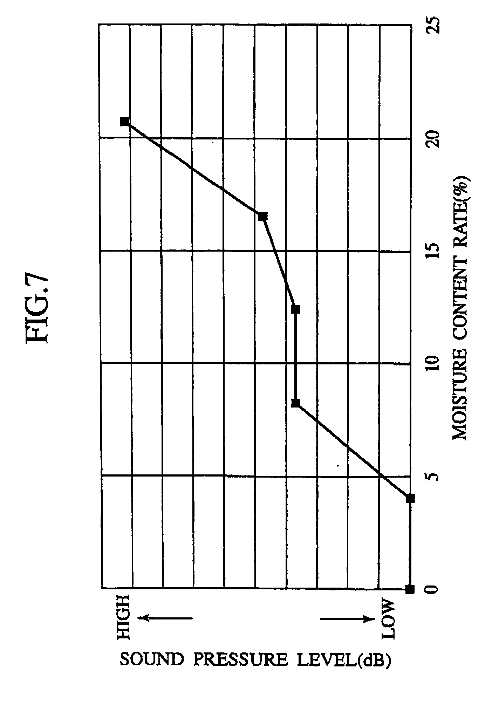

In Figs. 6 and 7, the horizontal axis indicates moisture content rate of a sound-absorption material, and the vertical axis indicates sound-pressure level, wherein higher sound-pressure level indicates worse sound-damping deterioration level (insertion-loss deterioration level or lower sound-damping performance).

### DETAILED DESCRIPTION OF THE PREFERRED EMBODIMENTS

An embodiment of the present invention is described with reference to the drawings.

### First Embodiment

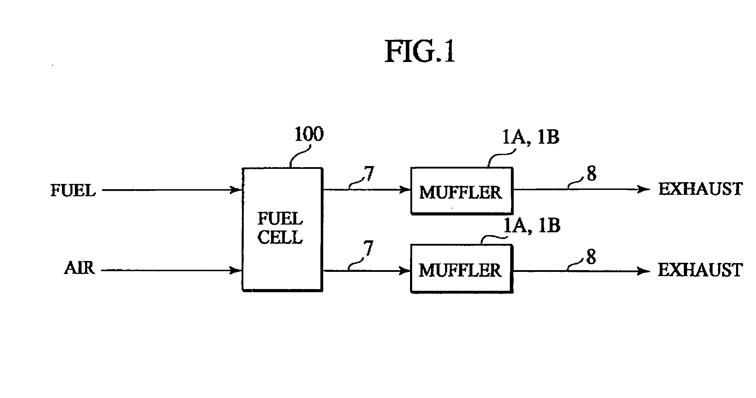

Referring to Fig. 1, a fuel cell 100 has fuel and air which are introduced therein for an electrochemical reaction that produces electronic power. The fuel cell 100 has upstream and downstream pipes 7, 8 for discharging an exhaust gas. The fuel cell 100 has mufflers 1A or 1B between the discharge pipes 7, 8. The mufflers 1A or 1B may be positioned upstream of the fuel cell 100 between the fuel cell 100 and a fuel storage or an air storage.

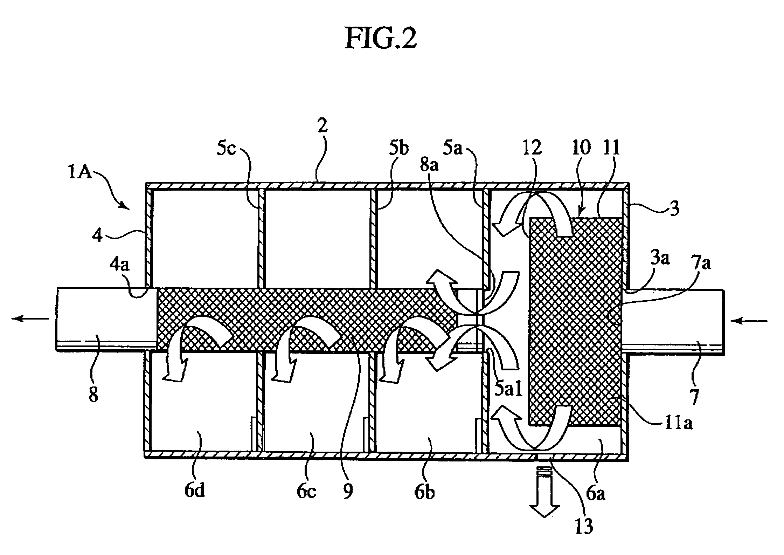

Referring to Fig. 2, a muffler 1A includes a cylindrical shell 2, with two circular end plates 3, 4 closing both ends of the shell 2. The shell 2 and end plates 3, 4 define a space hermetically sealed inside of them. The space is separated into four first to fourth expansion chambers 6a to 6d of a sound-absorption material by three partitions 5a, 5b and 5c.

The end plate 3 of first chamber 6a has a hole 3a connected to an inlet 7a of an upstream discharge pipe 7. The other end of discharge pipe 7 is connected to a fuel cell 100 (not Illustrated in Fig.). An exhaust gas from the fuel cell 100 flows into the first expansion chamber 6a through discharge pipe 7.

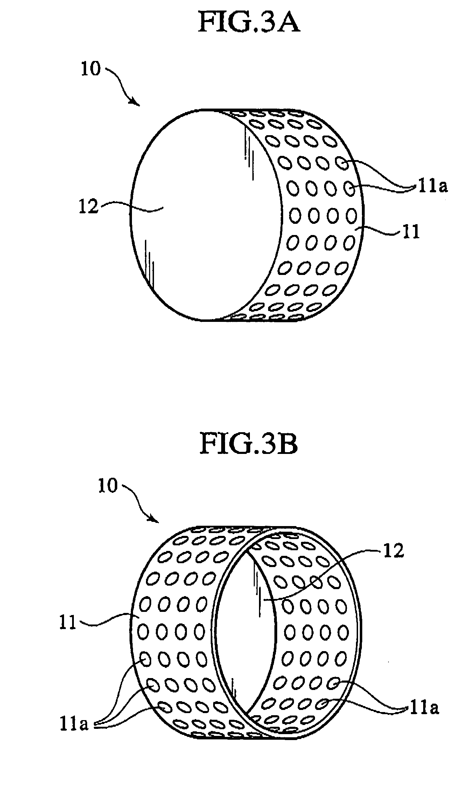

The muffler 1A includes a downstream discharge pipe 8 with an end that passes through a hole 4a of the end plate 4 of the fourth expansion chamber 6d and respective three partitions 5a to 5c. The inlet 8a of discharge pipe 8 is positioned to face the first expansion chamber 6a. The discharge pipe 8 extends between the second, third, and fourth chambers 6b, 6c, and 6d, with a circumferential wall having a mesh 9 formed with holes. An exhaust gas flows into or out between the second to fourth expansion chambers 6b to 6d through mesh 9. The first expansion chamber 6a houses a moisture-remover 10 therein. The moisture-remover 10 is located to enclose the inlet 7a of discharge pipe 7. As illustrated in Figs. 3A and 3B, the moisture-remover 10 includes a cylindrical pipe 11 formed radially with holes 11a. The moisture-remover 10 includes a hole-free closed plate 12 located to face the inlet 7a of discharge pipe 7. The closed plate 12 is fixed to and closes off the circular end of moisture-remover 10.

As illustrated in Fig. 2, the shell 2 has an outlet 13 in the first expansion chamber 6a at the lowermost part in a vertical direction. The outlet 13 may be located at any portions on the shell 2 of the expansion chamber 6a in a radial or transverse direction of the shell 2. The outlet 13 may be located to or extend between at least one of first, second, third and fourth expansion chambers 6a, 6b, 6c and 6d. The outlet 13 may be shaped as a circle, a triangle, a rectangle, a polygon or other configuration.

Next, the operation of muffler 1A is described.

An exhaust gas with moisture flows from a fuel cell 100 into the first expansion chamber 6a through the discharge pipe 7. The exhaust gas disperses in a space inside of the first expansion chamber 6a. Then, the exhaust gas flows into the second to fourth expansion chambers 6b to 6d, while dispersing. The exhaust gas collides against the shell 2 or end plates 3, 4, of a sound-absorption material, thus being damped.

In the operation step, the exhaust gas, flowing from discharge pipe 7 into first expansion chamber 6a, collides against the closed plate 12, while dispersing. Lower temperaturization during gas dispersion and collision against the closed plate 12 accelerate to condense the moisture in the exhaust gas. The exhaust gas, colliding against closed plate 12, is discharged from the moisture-remover 10 through the holes 11a of pipe 11 to collide against the inner wall of shell 2 at the first chamber 6a. The collision accelerates to condense moisture in the exhaust gas. The first expansion chamber 6a stores drain to be discharged from the outlet 13.

An exhaust gas, colliding against the inner wall of shell 2 at the first expansion chamber, flows into discharge pipe 8 through the opening 5a1 of partition 5a. The exhaust gas travels downstream, while flowing into and out of the second to fourth expansion chambers 6b to 6d, repeatedly. Finally, the exhaust gas is discharged to outside air through the discharge pipe 8.

The operation reduces moisture content mixed with the exhaust gas in the muffler 1A, preventing water-jump from discharge pipe 8. The muffler 1A does not store a drain therein, and maintains stable sound-damping performance.

According to the first embodiment, the moisture-remover 10 in the first expansion chamber 6a condenses moisture in the exhaust gas. This further reduces moisture content mixed in the exhaust gas, effectively preventing water-jump.

An exhaust gas passes through holes 11a to be arranged in streams, reducing airflow noise and pressure loss of the exhaust gas.

The moisture-remover may have another structure other than the aforementioned, which can separate and condense moisture from the exhaust gas.

The moisture-remover 10 has the cylindrical pipe 11, which radially discharges exhaust gas from the holes 11a of the pipe 11 toward the inner wall of shell 2 at the first expansion chamber 6a. This smoothes a flow of the exhaust gas and further reduces airflow noise and pressure loss. The pipe 11 may have another shape other than a cylindrical shape.

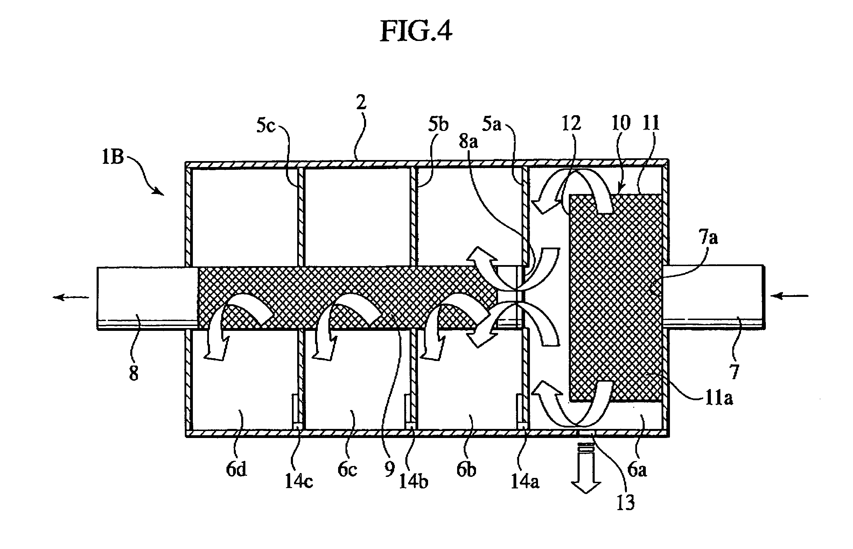

Referring to Fig. 4, a muffler 1B according to the second embodiment is described. The muffler 1B is characterized by communication holes 14a, 14b, 14c formed at respective lower positions of partitions 5a, 5b, 5c. The muffler 1B includes other constitutions similar to the muffler 1A. Like members are designated by like reference characters in Figs, with the descriptions omitted.

The muffler 1B reduces moisture content mixed in an exhaust gas, preventing water-jump. Without requiring storing drain inside, the muffler 1B maintains stable sound-damping performance.

A drain stored in the second to fourth expansion chambers 6b to 6d flows into the first expansion chamber, and is discharged from the outlet 13. Thus, the muffler 1B further reduces drain volume, and further maintains stable sound-damping performance.

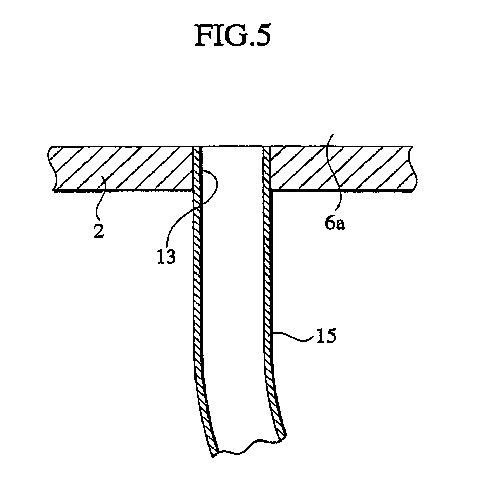

Referring to Fig. 5, a modification of the drainage structure is described. The outlet 13 is connected to an end of a small-sized tube 15. A drain in the first expansion chamber 6a is discharged from outlet 13 through the tube 15. It is preferable to use the tube 15 having a smaller size in view of sound-damping performance.

The drainage structure reduces noise (pulse- stream noise, airflow noise, whistle noise or the like) from outlet 13. The tube 15 has an arbitrarily positioned opening at the other end, which facilitates taking measures against water-jump of drain discharged from outlet 13.

The outlet 13 may have an open/close valve or a lid. The structure reduces noise (pulse-stream noise, airflow noise), and, in addition, allows appropriate selection of drainage timing for easy measures against water-jump.

The aforementioned first and second embodiments have mufflers 1A, 1B separated into the first to fourth expansion chambers 6a to 6d inside thereof. The mufflers 1A, 1B may be separated into two, three, or five or more chambers, and may be appropriately changed in design in accordance with an object of sound-damping.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

### Experimental Example

Owing to preventing noise during discharging of an exhaust gas, the discharge pipe includes a muffler midstream thereof. The storing of a drain in the muffler deteriorates sound-damping performance of the muffler. Specifically, sound absorption material used for the muffler, regardless of whether high or low pitched sound, has sound-damping deterioration level which increases rapidly at a moisture content rate over 4 %, and is further increased by higher pitched sound, as shown in Figs 6 and 7. The moisture content rate (%) represents a value of (a volume of water) / (a volume of filled absorption material). The reason for the rapid increase of sound-damping deterioration level is considered to be that moisture content reduces contact surface area of the sound absorption material.

According to the invention, when a gas is introduced from a fuel cell into a sound-absorbing structure or an expansion chamber, the gas is dispersed to accelerate moisture Included in the gas to be condensed into a drain. The drain is discharged from an outlet of the sound-absorbing structure or the expansion chamber. Thus, a muffler maintains sound-damping performance without storing a drain therein. This reduces moisture content mixed in the gas, thus preventing water-jump.

A remover separates moisture from the gas. This reduces moisture content mixed in the gas, thus preventing water-jump from a discharge pipe.

A gas is introduced into the expansion chamber to collide against a closed wall. The collision allows moisture to be . separated from the gas. The gas is discharged from holes of a tube to collide against an inner wall of the expansion chamber. The collision allows moisture in the gas to be condensed and separated therefrom. The operation permits the remover to separate moisture from the gas. The gas is arranged in streams through the holes, thus reducing airflow noise and pressure loss.

The gas is discharged radially toward an inner wall of the expansion chamber through the holes. This permits the gas to be smoothly discharged, thus reducing airflow noise and pressure loss.

A drain, condensed in other expansion chamber, flows into the expansion chamber through second holes of partitions to be discharged through the outlet. Thus, avolume of drain is further reduced in the muffler, which maintains stable sound-damping performance.

A tube reduces noise from the outlet. Arbitrary positioning of the other end of the tube facilitates taking measures against water-jump to be discharged from the outlet.

## Claims

1. A muffler comprising:
a sound-absorbing structure having a gas introduced from a fuel cell; and
an outlet defined by the sound-absorbing structure for discharging a drain separated from the gas.

2. The muffler according to claim 1,
wherein the sound-absorbing structure has expansion chambers separated from each other,
wherein one of the expansion chambers has an inlet for introducing the gas, and
wherein the outlet is located at said one of the expansion chambers.

3. The muffler according to claim 1,
wherein the sound-absorbing structure includes a remover configured to remove moisture from the gas.

4. The muffler according to claim 3,
wherein the sound-absorbing structure has an inlet for Introducing the gas, and
wherein the remover comprises,
a tube enclosing the inlet and having a first hole through the tube in a radial direction; and
a wall located opposing the inlet and closing off the tube in an axial direction.

5. The muffler according to claim 4,
wherein the tube is configured in a cylindrical shape.

6. The muffler according to claim 2,
wherein the expansion chambers include a partition between the expansion chambers, and
wherein the partition defines a second hole for the expansion chambers to communication with each other through the second hole.

7. The muffler according to claim 6,
wherein the second hole is located at a lower half portion of the partition in a vertical direction.

8. The muffler according to claim 1,
wherein the outlet connects with another tube.
